# EUROPÄISCHE PATENTSCHRIFT

(11) **EP 1 642 155 B1**
(45) Veröffentlichungstag und Bekanntmachung des Hinweises auf die Patenterteilung: **12.10.2016**
(21) Anmeldenummer: 04739460.6
(22) Anmeldetag: 29.05.2004
(51) Int. Cl.: G01T 1/00

(54) **DOSIMETER ZUR ERFASSUNG VON NEUTRONENSTRAHLUNG**
DOSIMETER FOR THE DETECTION OF NEUTRON RADIATION
DOSIMETRE DESTINE A DETECTER DES RAYONNEMENTS NEUTRONIQUES

(30) Priorität: 27.06.2003 DE 10329816; 01.08.2003 DE 10335225
(43) Veröffentlichungstag der Anmeldung: 05.04.2006
(73) Patentinhaber: GSI Helmholtzzentrum für Schwerionenforschung GmbH, 64291 Darmstadt (DE)
(72) Erfinder: FEHRENBACHER, Georg, 64367 Mühltal (DE)
(74) Vertreter: Blumbach Zinngrebe
(86) Internationale Anmeldenummer: PCT/EP2004/005845
(87) Internationale Veröffentlichungsnummer: WO 2005/001512

(56) Entgegenhaltungen:
- CH-A- 508 887
- DD-A- 134 392
- DE-A1- 3 201 243
- US-A- 3 699 337
- US-A- 4 785 168
- US-A- 4 804 514
- US-A- 5 321 269
- US-A- 5 406 086
- PATENT ABSTRACTS OF JAPAN Bd. 0124, Nr. 17 (P-782), 7. November 1988 (1988-11-07) & JP 63 154984 A (HAMAMATSU PHOTONICS KK; others: 01), 28. Juni 1988 (1988-06-28)
- PATENT ABSTRACTS OF JAPAN Bd. 1997, Nr. 05, 30. Mai 1997 (1997-05-30) & JP 09 021881 A (ALOKA CO LTD), 21. Januar 1997 (1997-01-21)
- PATENT ABSTRACTS OF JAPAN Bd. 2000, Nr. 10, 17. November 2000 (2000-11-17) -& JP 2000 206261 A (MATSUSHITA ELECTRIC IND CO LTD), 28. Juli 2000 (2000-07-28)
- LUSZIK-BHADRA M ET AL: "Development of personal neutron dosemeters at the PTB and first measurements in the space station MIR" RADIATION MEASUREMENTS, ELSEVIER SCIENCES PUBLISHERS, BARKING, GB, Bd. 33, Nr. 3, Juni 2001 (2001-06), Seiten 305-312, XP004249148 ISSN: 1350-4487

## Beschreibung

Die Erfindungsmeldung betrifft ein Dosimeter zur Erfassung von hochenergetischen, schnellen und niederenergetischen Neutronen.

Weltweit werden Beschleunigeranlagen für Forschungszwecke und zur Nutzung im industriellen und medizinischen Umfeld betrieben. In diesen Beschleunigeranlagen werden Teilchen auf sehr hohe Energien beschleunigt. Beispielsweise werden in modernen Schwerionenbeschleunigern Ionen bis auf Energien von ca. 1 GeV pro Nukleon beschleunigt. In anderen Anlagen werden Teilchen auf noch höhere Energien bis in den Bereich Tera-Elektronenvolt (TeV) beschleunigt. Diese hochenergetischen Teilchen produzieren Sekundärstrahlung, geladene Teilchen und Neutronen, wenn sie mit Materie in Wechselwirkung treten. Das Energiespektrum der erzeugten Neutronen reicht von 0,025 eV bis einige hundert Giga-Elektronenvolt (GeV), da die maximale Energie der erzeugten Neutronen denselben Energiebereich wie die der primären Teilchenstrahlen aufweist. Für den Strahlenschutz ist es notwendig, die erzeugten Neutronen zu messen, um Strahlenschutzmaßnahmen, insbesondere Abschirmungen, zu dimensionieren. Da hochenergetische Neutronen eine große mittlere Weglänge in Materie haben, können sie auch sehr starke Abschirmungen durchdringen. Deshalb ist es notwendig und von großer Bedeutung, ständig die Neutronenintensitäten, sowie Energie- und Winkelverteilung der Neutronen zu messen und zu überwachen, auch außerhalb der Abschirmungen. Personen, die sich im Bereich der Beschleunigeranlagen (innerhalb oder außerhalb der Abschirmungen) bewegen, müssen ständig Personendosimeter tragen, die die aktuelle Neutronendosis der diese Personen ausgesetzt sind messen und speichern.

Insbesondere für die Strahlenschutzüberwachung ist es wichtig, Dosimeter zum Nachweis von Neutronenstrahlung zu entwickeln, die im gesamten Energiebereich der Neutronenstrahlung vom Bereich thermischer Neutronen (0,025 eV) bis zu den höchsten Energien im Bereich von GeV oder höher (bis zu 1 TeV) verwendet werden können.

Dosimeter für Neutronenstrahlung wurden bisher für Bereiche der Kerntechnik (Kernreaktoren, Radio-Nuklidquellen, Brennelementeindustrie, Transport von abgebrannten Brennelementen) entwickelt, die Dosismessungen für Energien bis maximal ca. 10 bis 20 MeV ermöglichen.

Ein aus eines Polymerschicht, eines Borschicht und einem Detektionselement bestehendes Dosimeter wird in JP 2000206261 beschrieben.

Das Ansprechvermögen der meisten Dosimetertypen ist für Neutronen höherer Energie als 20 MeV sehr gering, wobei mit steigender Neutronenenergie das Ansprechvermögen abnimmt. Einer der Gründe für diesen Effekt ist die Abnahme des Wirkungsquerschnittes, der für den Nachweis genutzten Reaktionen mit zunehmender Neutronenenergie. Im Allgemeinen gilt, dass mit zunehmender Neutronenenergie die in elastischer und inelastischer Streuung erzeugten Teilchen auch energiereicher werden. Es gilt für das Abbremsungsvermögen von geladenen energiereichen Teilchen, dass mit zunehmender Energie das Abbremsvermögen und damit auch die Energiedeposition in der Dosimeterschicht abnimmt. Dies führt ab einer bestimmten Energie der geladenen Teilchen dazu, dass diese nicht mehr nachgewiesen werden können. Neutronenfelder mit Anteilen an Neutronen höherer Energien im Energiespektrum können dann nur über spezielle Kalibrierfaktoren in der Dosisabschätzung gemessen werden. In Beschleunigern sind jedoch die Neutronenfelder in ihrer Energieverteilung sehr unterschiedlich, so dass einheitliche Kalibrierfaktoren nicht immer angegeben werden können. Dosimetrische Systeme, die den gesamten Energiebereich messen, existieren bisher nicht.

Es gibt in der Literatur Ansätze, das Ansprechvermögen der Neutronendosimeter für hohe Neutronenenergien zu verbessern, indem die Neutronenenergie mittels Vorschaltung eines Moderators vor das eigentliche Dosimeter erniedrigt wird. Dieser Ansatz kann für die extrem hohen Neutronenenergien nicht verwendet werden, da die Moderationskörper zu großvolumig im Einsatz in einem Personendosimeter wären.

Des weiteren wird die Verwendung von radioaktiven Folien aus spaltbarem Material zusammen mit Kernspurdetektoren beschrieben. Auch diese sind als Personendosimeter nicht sinnvoll einsetzbar, da Dosimeter mit radioaktiven Bestandteilen in der Personendosimetrie nicht verwendbar sind.

Das in CH508887 beschriebene Dosimeter verwendet Spalt metallscheiben und eine Answerte apparatur.

Aufgabe der Erfindung ist es, Dosimeter zur Erfassung hochenergetischer Neutronenstrahlung zu entwickeln, die es gestatten hohe Neutronenenergien bis zu sehr hohen Energien von beispielsweise 1 TeV zu messen.

Zur Lösung dieser Aufgabe wird ein Dosimeter mit den in Anspruch 1 genannten Merkmalen vorgeschlagen. Da es sich bei Neutronen um elektrisch neutrale Teilchen handelt, können diese nicht direkt mittels eines Ionisationsprozesses nachgewiesen werden, es erfolgt daher eine Umwandlung in ionisierende Strahlung. Die hochenergetischen Neutronen werden mit Hilfe von Metallatomen in geladene Teilchen wie Protonen, Alphateilchen und andere geladene Kerne umgewandelt, die direkt in einem Detektionselement des Dosimeters nachgewiesen werden können.

Das Dosimeter mit den in Anspruch 1 genannten Merkmalen erfüllt die folgenden Anforderungen:
1. Es wird ein ausreichend großer Wirkungsquerschnitt für Reaktionen der einfallenden Neutronen mit den Metallatomen des Neutronenkonverters realisiert, so dass die Energie der Neutronen umgesetzt wird in Protonen, Alpha-Teilchen und andere geladene Kerne.
2. Der Wirkungsquerschnitt des Dosimeters ist energieabhängig. Durch geeignete Wahl der Metallatome wird sichergestellt, dass dieser auch bei sehr hohen Neutronenenergien noch ausreichend groß ist.
3. Bei der Umsetzung der Energie von Neutronen in die oben genannten Teilchen wird sichergestellt, dass diese eine ausreichend hohe Energie haben, um von dem Detektionselement erfasst zu werden. Gleichzeitig ist ihre Energie nicht so groß, so dass eine genügend hohe Energiedeposition im Detektionselement erfolgen kann.
4. Bei der Umsetzung der Energie der Neutronenstrahlung treten folgende physikalische Effekte auf: Spallation, Fragmentation und Spaltung. Zur Detektion der hochenergetischen Neutronenstrahlung werden hier die bei der Spallation und bei der Fragmentation entstehenden Teilchen ausgenutzt.

Bevorzugt wird ein Ausführungsbeispiel eines Dosimeters, das sich dadurch auszeichnet, dass der Neutronenkonverter in einer ersten Schicht mehrere Schichten umfasst, die jeweils Metallatome einer bestimmten Kernladungszahl aufweisen. Dadurch können Neutronenstrahlungen unterschiedlicher Energie optimal ausgewertet werden.

Das erfindungsgemäße Dosimeter zeichnet sich ferner dadurch aus, dass der Neutronenkonverter eine dünne Schicht mit ⁶Li- und/oder ¹⁰B-Atomen und/oder ¹⁴N-Atomen aufweist. Vorzugsweise wird für die ¹⁴N-Atome umfassende Schicht ein Polyamid wie beispielsweise Nylon verwendet. Die Atome sind vorzugsweise in einer dünnen Schicht angeordnet, die von der der Neutronenstrahlung zugewandten Seite des Dosimeters aus gesehen, vor dem Detektionselement liegt. Das so aufgebaute Dosimeter ist dazu geeignet, zusätzlich Neutronenstrahlung mit einer geringeren Energie, beispielsweise thermische Neutronen zu erfassen.

Das erfindungsgemäße Dosimeter zeichnet sich ferner dadurch aus, dass ein wasserstoffhaltiges Polymer vorgesehen ist. Dabei ist der Neutronenkonverter mit unterschiedlichen Schichten versehen, von denen die der Neutronenstrahlung zugewandte erste Schicht Metallatome, die darunter liegende zweite Schicht das wasserstoffhaltige Polymer und die dritte Schicht ⁶Li-und/oder ¹⁰B-Atome und/oder ¹⁴N-Atome enthält. Die dritte Schicht ist unmittelbar in der Nähe des Detektorelements angeordnet oder auf diesem vorgesehen.

Weitere Ausgestaltungen ergeben sich aus den übrigen Unteransprüchen.

Die Erfindung wird im Folgenden anhand der Zeichnungen näher erläutert. Es zeigen:
- Figur 1: ein Dosimeter mit einem nicht anspruchsgemäßen Neutronenkonverter, der Metallatome aufweist, und einem Detektionselement;
- Figur 2: ein nicht anspruchsgemäßes Dosimeter mit einem eine Anzahl von Schichten mit Metallatomen unterschiedlicher Kernladungszahl Z aufweisenden Neutronenkonverter und einem Detektionselement;
- Figur 3: ein nicht anspruchsgemäßes Dosimeter mit einem Neutronenkonverter, der unterschiedliche Schichten aufweist, die der Erfassung von Neutronenstrahlung unterschiedlicher Energie dienen, außerdem ein Detektionselement;
- Figur 4: ein erfindungsgemäßes Dosimeter mit einem Neutronenkonverter, der unterschiedliche Schichten aufweist zur Erfassung von Neutronenstrahlung unterschiedlicher Energie dienen, außerdem ein Detektionselement;
- Figur 5: ein nicht anspruchsgemäßes Dosimeter mit Bereichen unterschiedlicher Dicke im Neutronenkonverter sowie einem Detektionselement;
- Figur 6: eine Draufsicht auf ein nicht anspruchsgemäßes Dosimeter mit einem Neutronenkonverter, der unterschiedliche Felder aufweist und
- Figur 7: eine Anordnung einer Anzahl von Dosimetern zur Ortsdosimessung.

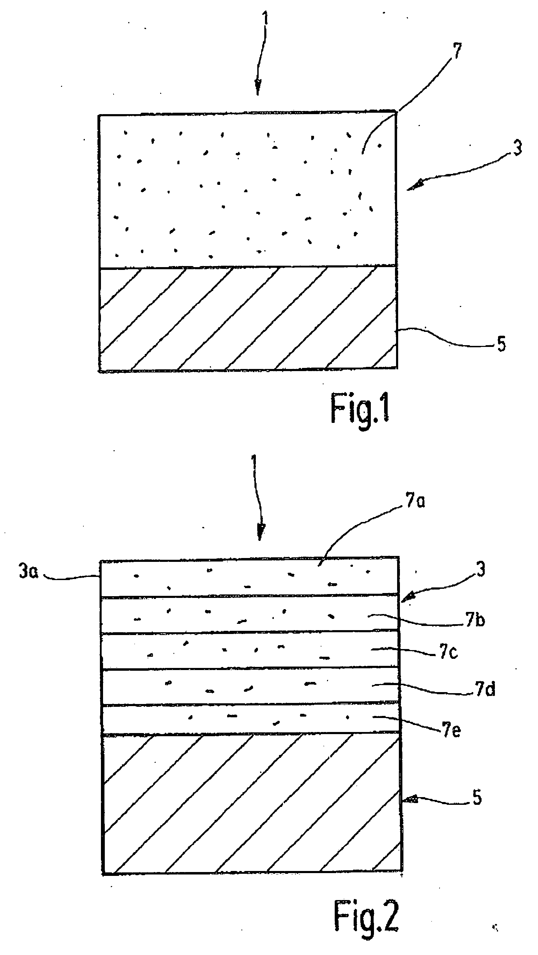

Das in Figur 1 dargestellte Dosimeter 1 ist im Querschnitt dargestellt. Dadurch wird erkennbar, dass das Dosimeter einen Neutronenkonverter 3 und ein Detektionselement 5 aufweist. Bei der Erfassung hochenergetischer Neutronenstrahlung treffen die Neutronen bei der Darstellung gemäß Figur 1 von oben auf den Neutronenkonverter 3 auf. Der Neutronenkonverter 3 umfasst auftreffen. Falls die einfallenden Neutronen auf ein Metallatom mit vielen Nukleonen treffen, kommt es zur Spallation, also zur Abdampfung von Protonen und Neutronen. Es bildet sich eine intranukleare Kaskade im Kern des Metallatoms, bei der außer Protonen Neutronen emittiert werden, deren Energie geringer ist als die der auf das Dosimeter 1 auftreffenden Neutronen.

Die auf die Metallatome 7 auftreffenden Neutronen lassen die Kerne der Metallatome zerbrechen, es kommt also zu einer Fragmentation des auch als Targetkern bezeichneten Metallatoms in mehrere Kerne und anschließend zu einem Verdampfungsprozess von geladenen Teilchen. Dabei werden, außer Protonen und Alpha-Teilchen sowie weiteren Fragmenten, Neutronen erzeugt. Die Energie der entstehenden geladenen Teilchen ist geringer als die der auf das Dosimeter 1 auftreffenden Neutronen.

Beim Auftreffen der hochenergetischen Neutronenstrahlung auf den Neutronenkonverter 3 des Dosimeters 1 finden die Spallation oder die Fragmentation statt. Im Übrigen findet auch noch eine Spaltung schwerer Kerne in zwei Kerne unter Freisetzung von zwei bis drei Neutronen statt. Dies allerdings vorwiegend bei der Verwendung von Metallatomen radioaktiver Substanzen. Bei der Verwendung des Dosimeters 1 als Personendosimeter wird naturgemäß darauf geachtet, dass keine radioaktiven Metallatome eingesetzt werden. Sie haben aber je nach Energie der einfallenden Neutronen einen unterschiedlichen Wirkungsquerschnitt. Dadurch weist das Dosimeter eine unterschiedliche Ansprechfunktion oder ein unterschiedliches Ansprechvermögen auf. Fallen Neutronen mit einer Energie von ca. 30 MeV auf das Dosimeter, so werden durch die bei der Spallation auftretende intranukleare Kaskade Protonen erzeugt, deren Energie von dem Detektionselement 5 erfassbar ist. Die Energie ist allerdings so gering, dass das Detektionselement 5 nicht anspricht.

Bei einer höheren Energie der auf das Dosimeter 1 auftreffenden Neutronenstrahlung ergibt sich Folgendes:
Die durch Kaskadenprozesse erzeugten Protonen haben entsprechend der höheren Energie der einfallenden Neutronen ihrerseits eine höhere Energie, die schließlich bei steigender Energie der Neutronen so groß ist, dass diese Protonen von dem Detektionselement 5 nicht mehr registrierbar sind. Bei der gleichzeitig gegebenen Fragmentation werden in diesem Fall Protonen erzeugt, deren Energie so groß ist, dass sie von dem Detektionselement 5 erfassbar werden.

Es zeigt sich also, dass bei der Erfassung der Neutronenstrahlung bei einer niedrigeren Energie aufgrund der Abdampfung von Protonen eine Detektion mittels des Detektionselements 5 möglich ist. Bei einer höheren Energie der zu erfassenden Neutronenstrahlung kann eine Detektion im Detektionselement 5 nicht bezüglich der durch die intranukleare Kaskade erzeugten Protonen erfolgen. Hier sind es die im Fragmentationsprozess durch Abdampfung entstehenden Protonen, die von dem Detektionselement 5 des Dosimeters 1 erfasst werden können. Dadurch ergänzen sich also diese beiden physikalischen Effekte bei der Erfassung hochenergetischer Neutronenstrahlung, wobei bis zu Energien von 30 MeV die intranukleare Kaskade der zur Detektion beitragende Prozess ist und für Energien ab einigen 100 MeV die Verdampfungsprozesse bei der Fragmentation dominierend sind.

Um Neutronenstrahlung unterschiedlicher Energie erfassen zu können, werden die Kernladungszahlen der Metallatome so gewählt, dass im Rahmen der Spallation und der Fragmentation erzeugte Protonen sicher im Detektionselement 5 erfasst werden können. Die Spallation und Fragmentation findet nur bei Vorhandensein von Metallatomen mit genügend hoher Kernladungszahl statt, dadurch dass auf das Dosimeter 1 auftreffende Neutronen die Kerne der Metallatome aufheizen und die kinetische Energie des eintreffenden Neutrons auf viele Nukleonen verteilt wird. Erst wenn die Energie des eintreffenden Neutrons auf ausreichend viele Nukleonen verteilt ist, findet eine Abdampfung von Neutronen, Protonen und Alpha-Teilchen statt, deren Energie so ist, dass sie im Detektionselement 5 des Dosimeters 1 registriert werden können.

Insgesamt wird also durch die auf die Metallatome 7 auftreffenden Neutronen ein Teilchenspektrum erzeugt, dessen Energie geringer ist als die Energie der auftreffenden Neutronen. Da die Kernladungszahl Z der Metallatome die Energieverteilung der emittierten Teilchen bestimmt, kann sie so gewählt werden, dass die Teilchen von dem Detektionselement 5 erfasst werden können.

Durch die Wahl der Kernladungszahl Z der Metallatome kann auch bei unterschiedlicher Energie der zu erfassenden Neutronenstrahlung sichergestellt werden, dass jeweils Teilchen mit einem Energiespektrum erzeugt werden, die von dem Detektionselement 5 erfassbar sind. Beispielsweise kann für die im Neutronenkonverter 3 vorhandenen Metallatome 7 eine Kernladungszahl Z >15 gewählt werden. Vorzugsweise werden Metallatome mit einer Kernladungszahl Z >20 gewählt, um auch bei sehr hochenergetischer Neutronenstrahlung Teilchen entstehen zu lassen, die von dem Detektionselement 5 erfassbar sind.

Beispielsweise können in dem Neutronenkonverter 3 Metallatome der Eisengruppe (Sc, Ti, V, Cr, Mn, Fe, Mn, Co, Cu) mit einer Kernladungszahl Z ≥ 20 und/oder der Gruppe beginnend mit der Kernladungszahl Z=39 (Y, Zr, Nb, Mo, Rh, Pd und Ag, ln) und/oder der Gruppe beginnend mit der Kernladungszahl Z ≥ 55 (Sb, Cs, Ce, Ba, La) und/oder der Gruppe beginnend mit der Kernladungszahl Z ≥ 63 (Eu, Wd, Sm, Ga, Er) und/oder der Gruppe beginnend mit der Kernladungszahl Z>74 (Ta, W, Re, Au, Pt) und/oder mit der Kernladungszahl Z = 80 (Hg) und Z = 82 (Pb) und Z = 83 (Bi) gewählt werden.

Für die Erfassung hochenergetischer Neutronenstrahlung werden besonders bevorzugt Metallatome von Titan, Kupfer, Eisen, Wolfram oder Blei. Aus diesen Metallen lassen sich nämlich leicht Metallplättchen herstellen, die ausgewalzt werden können.

Um das Dosimeter 1 auf die Erfassung von Neutronenstrahlung bestimmter Energie abstimmen zu können, werden auch Metallatome von Legierungen verwendet. Bevorzugt wird Elconite eingesetzt, das im Wesentlichen aus 35% Cu und 65% W besteht. Darüber hinaus können auch Atome von Metall enthaltenden Keramiken (Yttrium-oxid, Cer-Oxid) eingesetzt werden. Insgesamt ist festzuhalten, dass die in dem Neutronenkonverter 3 vorgesehenen Metallatome 7 danach ausgewählt werden, welche Energie der Neutronenstrahlung erwartet wird. Die Kernladungszahl der Metallatome wird entsprechend auf das zu erfassende Energiespektrum der Neutronenstrahlung abgestimmt.

Die Dicke des Neutronenkonverters 3 und die Anzahl der im Neutronenkonverter 3 vorhandenen Metallatome 7 muss so gewählt werden, dass einerseits eine ausreichend hohe Anzahl von Protonen erzeugt wird, und dass andererseits diese trotz ihrer begrenzten Reichweite das Detektionselement 5 erreichen und dort eine nachweisbare Spur hinterlassen. Vorzugsweise wird eine Bleischicht von cirka 2 mm Dicke als Neutronenkonverter 5 gewählt.

In Figur 1 ist schematisch dargestellt, dass der Neutronenkonverter 3 einzelne Metallatome 7 umfasst. Bevorzugt wird der Neutronenkonverter 3 durch eine auf das Detektionselement 5 aufgebrachte metallische Schicht realisiert, beispielsweise durch eine Metallfolie, die vorzugsweise in einem Walzprozess hergestellt wird, oder durch eine auf das Detektionselement 5 aufgedampfte Metallschicht.

Dabei können Metallatome von Metallen in Reinstform verwendet werden oder von Legierungen. Es ist also möglich, Metallfolien oder eine aufgedampfte Schicht aus Metallatomen in Reinstform oder aus einer Legierung zu realisieren.

Figur 2 zeigt ein abgewandeltes Dosimeter 1 im Querschnitt. Gleiche Teile sind mit gleichen Bezugsziffern versehen, so dass auf die Beschreibung zu Figur 1 verwiesen wird, um Wiederholungen zu vermeiden.

Das Dosimeter 1 weist einen Neutronenkonverter 3 auf, der mehr als eine Schicht mit Metallatomen, hier beispielsweise fünf Schichten, in der ersten Schicht 3a aufweist. Der Neutronenkonverter 3 umfasst, wie in Figur 1, Metallatome 7, die an die Energie der zu erfassenden Neutronenstrahlung angepasst sind.

Dabei sind in der obersten, der Neutronenstrahlung ausgesetzten Schicht der ersten Schicht 3a, Metallatome 7a vorgesehen. In der darunter liegenden Schicht 3b sind Metallatome 7b vorhanden. Entsprechend sind in den Schichten 3c, 3d und 3e, Metallatome 7c, 7d und 7e vorhanden.

Auch hier können die Metallatome in den einzelnen Schichten von Metallen in Reinstform vorliegen oder in Form von Legierungen.

In können den unterschiedlichen Schichten jeweils Metallatome unterschiedlicher Kernladungszahl Z vorhanden sein, wobei

in der ersten Schicht 3a von oben nach unten in den einzelnen Schichten Metallatome 7a bis 7e vorhanden sind, deren Kernladungszahl Z pro Schicht unterschiedlich ist. Dabei werden in der obersten Schicht Metallatome mit der größten Kernladungszahl und abgestuft in Richtung zum Detektionselement 5 in der untersten Schicht Metallatome 7e mit der kleinsten Kernladungszahl vorgesehen.

Die Kernladungszahl der Metallatome 7a bis 7e und der Abstand der jeweiligen Metallatome 7a bis 7e werden gewählt in Abhängigkeit von dem Energiespektrum der zu detektierenden Neutronenstrahlung.

Bei dem in Figur 2 dargestellten Dosimeter 1 ist es möglich, die Kernladungszahl der Metallatome 7a bis 7e pro Schicht von oben nach unten in Richtung zum Detektionselement 5 kontinuierlich abnehmen zu lassen oder aber auch innerhalb der Schichten eine freie Wahl der Kernladungszahl zuzulassen. Es kann also auch eine tiefer liegende Schicht Metallatome mit einer größeren Kernladungszahl aufweisen, als dies in den benachbarten Schichten der Fall ist. größeren Kernladungszahl aufweisen, als dies in den benachbarten Schichten der Fall ist.

Die Wahl der Folge der Schichten mit Metallatomen unterschiedlicher Kernladungszahl ist somit dem Energiespektrum der einfallenden zu messenden Neutronenstrahlung anpassbar, um ein optimiertes Ansprechvermögen des Dosimeters zu erreichen.

Die einzelnen Schichten nach Figur 2 können durch Metallfolien und/oder durch Metallbedampfung erzeugt werden. Es ist also möglich, die erste Schicht 3a des Dosimeters 1 mit verschiedenen Schichten herzustellen, die nur aus Folien bestehen oder die nur durch Metallbedampfung erzeugt wurden. Denkbar ist es aber auch, Metallfolien und Metallbedampfung zu kombinieren und in beliebiger Reihenfolge abzuwechseln.

Im Übrigen kann noch vorgesehen werden, dass die einzelnen Schichten der ersten Schicht 3a unterschiedlich dick ausgelegt sind, um das Ansprechverhalten des Dosimeters 1 auf Neutronenstrahlungen unterschiedlicher Energien abzustimmen.

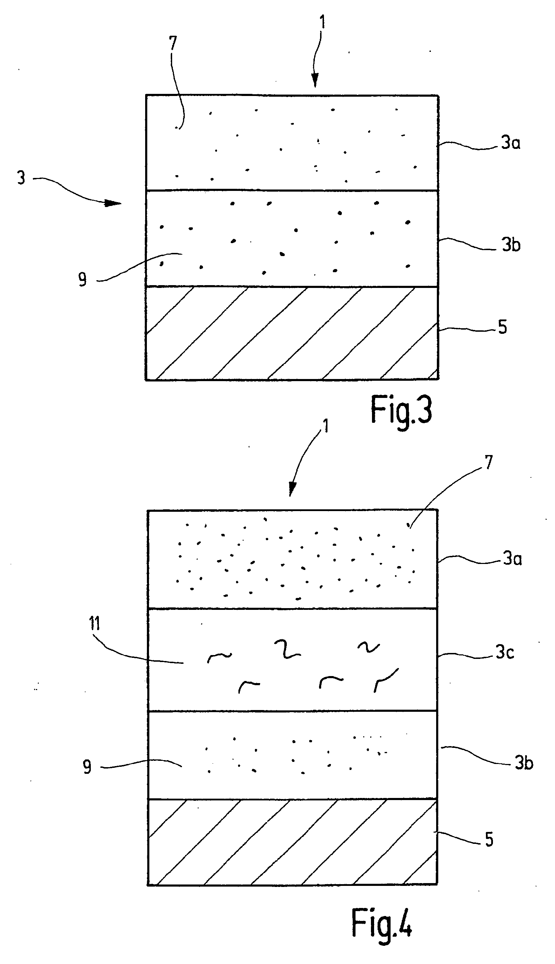

Figur 3 zeigt ein nicht erfindungsgemäßes Dosimeter 1 im Querschnitt. Gleiche Teile sind mit gleichen Bezugsziffern versehen, so dass auf die Beschreibung zu den vorangegangenen Figuren verwiesen wird.

Das Dosimeter 1 weist einen Neutronenkonverter 3 auf, der hier im Unterschied zur Erfindung gemäß Gegenstand des Anspruchs 1 nur zwei Schichten 3a und 3b umfasst, außerdem ein Detektionselement 5.

In der der einfallenden Neutronenstrahlung zugewandten ersten Schicht 3a sind wiederum Metallatome 7 vorgesehen, die, wie bei dem Ausführungsbeispiel gemäß Figur 2, von Metallen in Reinstform oder von Legierungen stammen können. Im Übrigen ist es möglich, die erste Schicht 3a durch eine Metallfolie oder durch Metallbedampfung zu realisieren.

In der dritten Schicht 3b sind ⁶Li- und/oder ¹⁰B-Atome und/oder ¹⁴N-Atome 9 vorhanden.

Zur Funktion des Dosimeters 1 ist Folgendes festzuhalten: Treffen auf die der Neutronenstrahlung zugewandten ersten Schicht 3a mit den Metallatomen 7 Neutronenstrahlen, so werden aufgrund von Spallation und Fragmentation, wie anhand der Figuren 1 und 2 erläutert, Protonen, Alpha-Teilchen und andere Kerne erzeugt, die in dem Detektionselement 5, das lediglich geladene Teilchen erfassen kann, detektierbar sind. Insofern wird auf das in den Figuren 1 und 2 Erläuterte verwiesen.

Beim Auftreffen der hochenergetischen Neutronen auf die Metallatome 7 in der ersten Schicht 3a werden aber auch Neutronen freigesetzt, deren Energie geringer ist als die der auftreffenden Neutronen. Die Neutronen an sich sind für das Detektionselement 5 nicht wahrnehmbar. Sie treffen auf die ⁶Li- und/oder ¹⁰B-Atome 9, wodurch eine (n,a)-Reaktion auftritt und/oder auf die ¹⁴N-Atome, wodurch eine (n, p)-Reaktion auftritt, durch die die hier auftreffenden Neutronen der Metallatome 7 in geladene Alpha-Teilchen beziehungsweise in Protonen konvertiert werden. Diese können von dem Detektionselement 5 registriert werden.

Mittels der ⁶Li und/oder ¹⁰B und/oder ¹⁴N-Atome 9 in der Schicht 3b des Neutronen konverters 3 können nicht nur die von den Metallatomen 7 stammenden Neutronen erfasst werden, was die Empfindlichkeit des Dosimeters 1 erhöht, sondern vorwiegend auf das Dosimeter 1 auftreffende Neutronen, deren Energiespektrum sehr niederenergetisch ist, so dass diese unmittelbar mit den Atomen 9 eine (n,a)-Reaktion und/oder (n,p)-Reaktion eingehen können.

Das in Figur 3 dargestellte Dosimeter 1 ist also bezüglich der zu detektierenden Neutronenstrahlung empfindlicher als die in den Figuren 1 und 2 dargestellten Dosimeter. Es ist außerdem in der Lage, auch Neutronenstrahlung mit einer niedrigeren unter 30 MeV liegenden Energie und die rückgestreuten Neutronen zu erfassen.

Somit ist das zu messende Energiespektrum des Dosimeters dieser Ausführungsform größer als das der in Figur 1 und 2 gezeigten Dosimeter.

In Figur 3 kann die obere erste Schicht 3a des Neutronenkonverters 3 für sich gesehen mehrere Schichten aufweisen, wie dies anhand Figur 2 erläutert wurde.

Figur 4 zeigt den Gegenstand des Anspruchs 1, ein abgewandeltes Ausführungsbeispiel eines Dosimeters 1 im Querschnitt, das grundsätzlich den gleichen Aufbau aufweist wie das in Figur 3 erläuterte. Gleiche Teile sind mit gleichen Bezugsziffern versehen, so dass auf die Beschreibung der vorangegangenen Figuren verwiesen wird. Der Neutronenkonverter 3 weist hier allerdings drei Schichten 3a, 3b und 3c auf, wobei die oberste Schicht 3a den einfallenden Neutronen zugewandt ist und die Schicht 3b auf dem Detektionselement 5 aufliegt. Die zweite Schicht 3c liegt zwischen der ersten Schicht 3a und der dritten Schicht 3b.

Das in Figur 4 dargestellte Ausführungsbeispiel des Dosimeters zeichnet sich also dadurch aus, dass zwischen den Schichten 3a und 3b des Neutronenkonverters 3 eine zweite Schicht 3c vorgesehen ist, die wasserstoffhaltiges Polymer umfasst, beispielsweise Polyethylen (PE) oder Polymethylmethacrylat (PMMA).

Der Neutronenkonverter 3 liegt auf einem Detektionselement 5 auf, wie dies oben im Einzelnen erläutert wurde.

In der Schicht, die wasserstoffhaltige Polymere umfasst, können Neutronen im Energiebereich zwischen einigen 100 KeV und einigen 10 MeV nachgewiesen werden. Hierbei findet elastische Streuung der hochenergetischen Neutronen mit den Protonen des wasserstoffhaltigen Polymers statt. Die Protonen werden dann im Detektionselement 5 nachgewiesen.

In der zweiten Schicht 3c können auch Neutronen die von oben oder von der Seite in diese Schicht eintreten, mittels elastischer Streuung registriert und erfasst werden.

Wie bei den anhand der vorangegangenen Figuren erläuterten Dosimetern kann die erste Schicht 3a des in Figur 4 dargestellten Dosimeters 1, aber auch die dritte Schicht 3b aus mehreren Schichten bestehen, wie dies anhand des in Figur 2 dargestellten Dosimeters erläutert wurde.

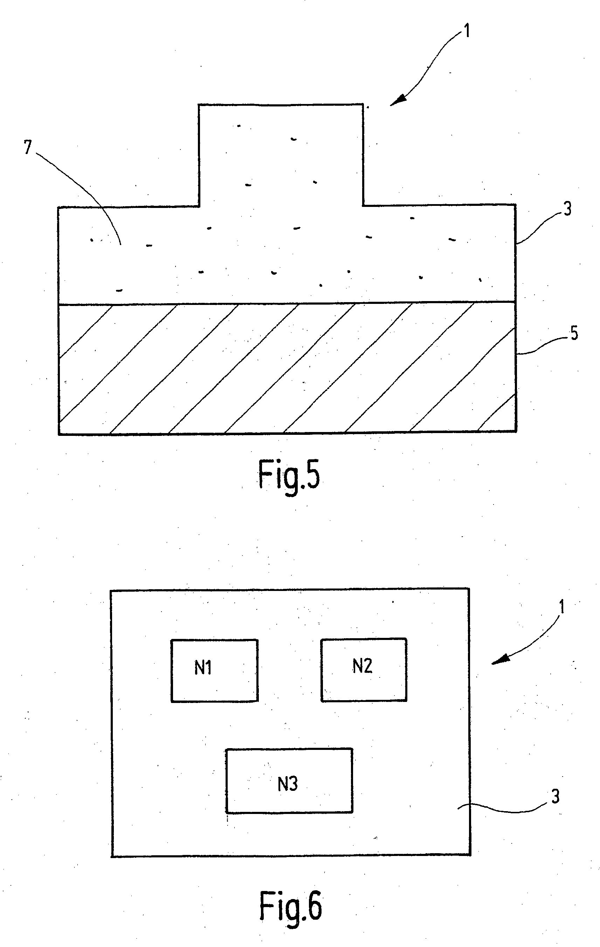

Figur 5 zeigt ein abgewandeltes Dosimeter 1 im Querschnitt, dessen Grundaufbau im Wesentlichen dem entspricht, der in Figur 1 dargestellt ist. Gleiche Teile sind mit gleichen Bezugsziffern versehen, so dass insofern auf die vorangegangene Beschreibung verwiesen wird.

Das in Figur 5 dargestellte Dosimeter 1 zeichnet sich dadurch aus, dass der Neutronenkonverter 3 über die Breite des Dosimeters 1 keine konstante Dicke aufweist. Beispielhaft ist hier vorgesehen, dass in einem mittleren Bereich die Dicke des Neutronenkonverters 3 größer ist als in den sich daran anschließenden seitlichen Bereichen.

Die Ausgestaltung des dickeren Bereichs ist frei wählbar und an unterschiedliche Detektionsfälle anpassbar. Beispielsweise kann der dickere Bereich im Wesentlichen rechteckförmig ausgebildet sein und sich über die Tiefe des Dosimeters 1 erstrecken. Denkbar ist es aber auch auf der Oberseite des Neutronenkonverters 3 einen viereckigen oder runden Vorsprung vorzusehen, so dass hier ein Bereich größerer Dicke gegeben ist.

Der hier dargestellte Aufbau des Dosimeters 1 bewirkt eine größere Sensibilität des Dosimters gegenüber einer senkrecht auftreffenden Neutronenstrahlung. Dies deshalb, weil im dickeren Bereich die Anzahl der Metallatome erhöht wird, die von dem Neutronenstrahl getroffen werden können. Damit ergibt sich hier im Bereich größerer Dicke für die Neutronen ein verlängerter Weg innerhalb des Neutronenkonverters 3 und damit eine erhöhte Wahrscheinlichkeit, Metallatome 7 zu treffen.

Durchlaufen Neutronenstrahlen den dünneren Bereich des Neutronenkonverters 3 unter einem Winkel, erhöht sich der Weg innerhalb des Konverters gegenüber einer senkrecht eintretenden Strahlung. Damit erhöht sich auch die Wahrscheinlichkeit, dass der Neutronenstrahl auf Metallatome trifft.

Dieser Aufbau ermöglicht es, ein Dosimeter 1 zu realisieren, der die Winkelabhängigkeit bei der Detektion von Neutronenstrahlen reduziert.

Figur 6 zeigt ein Dosimeter 1 in Draufsicht, also eine Draufsicht auf den Neutronenkonverter 3.

Grundsätzlich wird davon ausgegangen, dass der Neutronenkonverter 3 über seine gesamte Ausdehnung - in Draufsicht gesehen - einen gleichen Aufbau aufweist. Eine Draufsicht auf die in den Figuren 1 bis 4 dargestellten Dosimeter zeigte damit keine Struktur. Bei dem Dosimeter nach Figur 5 wäre lediglich der Bereich mit der größeren Dicke zu sehen.

Bei dem hier dargestellten Dosimeter 1 ist vorgesehen, dass der Neutronenkonverter 3 verschiedene Felder aufweist. Beispielhaft sind hier drei unterschiedliche Bereiche N1, N2 und N3 des Neutronenkonverters 3 vorgesehen, die im Wesentlichen rechteckförmig ausgebildet und in einem Abstand zueinander angeordnet sind. Denkbar ist es natürlich auch, die Kontur der Bereiche N1 bis N3 anders auszubilden, beispielsweise kreisförmig, ellipsoid oder dergleichen. Auch ist es möglich, die Bereiche unmittelbar aneinander angrenzen zu lassen und/oder eine andere Anzahl von Bereichen zu wählen.

Die Bereiche N1, N2 und N3 unterscheiden sich durch einen unterschiedlichen Aufbau. Dabei kann vorgesehen werden, dass die Bereiche mit Metallatomen unterschiedlicher Kernladungszahl Z versehen sind, verschieden aufgebaute Schichten oder dergleichen aufweisen.

In den verschiedenen Bereichen N1 bis N3 werden, wie oben beschrieben, geladene Teilchen erzeugt, die zu dem unterhalb des Neutronenkonverters 3 liegenden Detektionselement 5 gelangen und dort erfasst werden.

Der unterschiedliche Aufbau der Bereiche N1 bis N3 bedingt, dass die erzeugten geladenen Teilchen unterschiedliche Eigenschaften bezüglich der Energie- und Winkelverteilung aufweisen und damit ein unterschiedliches Detektionsverhalten im Detektionselement 5 bezüglich der drei Bereiche N1 bis N3.

Aus den unterschiedlichen Detektionsergebnissen im Detektionselement 5 kann somit das Energiespektrum und die Winkelverteilung der auf das Dosimeter 1 auftreffenden Neutronenstrahlung bestimmt werden. Dabei können die Eigenschaften der verschiedenen Felder N1 bis N3 variiert und auf Neutronenstrahlungen mit unterschiedlichen Energiespektren abgestimmt werden.

Grundsätzlich wird davon ausgegangen, dass das Detektionselement 5 bei allen anhand der Figuren 1 bis 6 beschriebenen Dosimeter gleich aufgebaut ist. Es lassen sich im Wesentlichen zwei Grundtypen unterscheiden, nämlich aktive Detektionselemente und passive.

Ein besonders einfacher Aufbau des Dosimeters 1 ergibt sich, wenn als Detektionselement 5 ein Teilchen registrierendes und speicherndes passives Detektionselement, hier beispielsweise ein anorganischer Kristall wie ein Thermolumineszenzkristall und/oder ein organischer Kristall und/oder ein Hochpolymer, wie Polykarbonat, und/oder ein anorganisches Glas gewählt wird.

In passiven Detektionselementen verursachen die geladenen Teilchen durch die Deponierung von Energie Strahlenschäden, die je nach dem zur Realisierung des Detektionselements verwendeten Material unterschiedlicher Natur sind und auch auf unterschiedliche Weise sichtbar gemacht werden können. Zur Auswertung des Detektionselements 5 wird dieses in der Regel aus dem Dosimeter 1 ausgebaut.

Die geladenen Teilchen verursachen beispielsweise in anorganischen Kristallen wie Thermolumineszenzkristallen, beispielsweise LiF-Mg, Ti oder CaF₂-Mn, Li₂B₄O₇-Mn, Mg₂SiO₄-Tb CaSo₄-Dy, BeOMa, AL₂O₃ durch die von den geladenen Teilchen deponierte Energie im Festkörpergitter freigesetzte Elektronen oder Löcher von bestimmten Störstellen eingefangen werden und Haftstellen erzeugen. Diese werden unter Energieabgabe durch gezieltes Aufheizen des Detektionselements 5 in Form von Wärme und Licht wieder frei. Das Licht kann in einem Photodetektor gemessen werden. Die Intensität des Lichts wird als Funktion der Temperatur in einem Spektrum der so genannten Glow-Kurve sichtbar. Die Fläche unter der Kurve ist ein Maß, für die Anzahl der erzeugten Haftstellen und damit für die Anzahl der vom Detektionselement 5 registrierten geladenen Teilchen. Die Anzahl der geladenen Teilchen ist abhängig von der Anzahl der auf das Dosimeter 1 auftreffenden hochenergetischen Neutronen.

Da verschiedene geladene Teilchen unterschiedliche Ionisierungsdichten haben und damit Energiebeträge unterschiedlicher Größe an das Detektionselement 5 abgeben, ist zur Anregung der dabei erzeugten Haftstellen auch eine unterschiedliche Temperatur erforderlich. Das bedeutet, dass in der Glow-Kurve bei unterschiedlichen Temperaturwerten Intensitätsmaxima zu sehen sind, die den unterschiedlichen Strahlungsarten zuzuordnen sind. Man kann also mittels Zuordnung der Intensitätsmaxima eine Aussage über das Teilchenspektrum und damit über die Art der geladenen Teilchen treffen.

Thermolumineszenzdetektoren können sehr erfolgreich auch in Bereichen eingesetzt werden, in denen nicht nur eine Neutronenstrahlung gegeben ist sondern auch eine Photonenstrahlung.

Das Detektionselement 5 kann auch ein organisches Hochpolymer wie Polycarbonat enthalten, vorzugsweise Allyldiglykol-karbonat (CR-39) oder Makrofol. Bei so ausgebildeten Detektionselementen 5 wird die von den geladenen Teilchen in das Detektionselement 5 eingetragene Energie in latenten Kernspuren gespeichert. Diese können mittels eines chemischen oder elektrochemischen Ätzverfahrens in so genannten Ätzgruben sichtbar gemacht und optisch ausgewertet werden. Die Dichte der innerhalb des Detektionselements 5 gegebenen Kernspuren ist proportional zu der Intensität der registrierten geladenen Teilchen, damit auch zu der Intensität der eingestrahlten Neutronen.

Es ist auch möglich, das Detektionselement 5 mit Hilfe von anorganischem Glas zu realisieren, in dem ebenfalls Kernspuren durch auftreffende geladene Teilchen entstehen. Das Glas wird ebenfalls mittels des im Zusammenhang mit Detektionselementen 5 aus Polycarbonat beschriebenen Verfahrens ausgewertet.

Die mit passiven Detektionseinheiten ausgebildeten Detektionselemente 5 werden in der Praxis für einen bestimmten, festgelegten Zeitraum der Strahlung ausgesetzt und dann ausgewechselt und ausgewertet.

Detektionselemente 5 mit passiven Elementen können Felder aufweisen, die unterschiedlich aufgebaut sind. Es kann sich also ein Aufbau ergeben, wie er anhand von Figur 6 bezüglich des Neutronenkonverters 3 erläutert wurde. Mit Detektionselementen 5, die derartige Felder aufweisen, ist es möglich, Energie und Art der auf das Dosimeter 1 auftreffenden Strahlung zu analysieren. Auf diese Weise ist es möglich, mit einem so ausgestalteten Dosimeter 1 nicht nur Neutronenstrahlungen sondern auch gemischte Strahlenfelder zu detektieren, die außer den Neutronen beispielsweise Photonen, unter anderem Gammastrahlung, aufweisen.

Dosimeter 1 der hier angesprochenen Art können auch mit Detektionselementen 5 ausgestattet werden, die mindestens ein aktives Element aufweisen. Diese zeichnen sich dadurch aus, dass die auftreffende Strahlendosis zu jedem Zeitpunkt abrufbar ist. Damit kann die aktuelle Neutronendosis zu jedem Zeitpunkt angezeigt werden.

Bei der Realisierung von aktiven Elementen werden in diesem Zusammenhang bevorzugt MOS-Durchbruchdetektoren verwendet, deren Wirkprinzip auf der Registrierung elektrischer Durchbrüche durch eine SiO₂-Schicht eines MOS-Kondensators beruht. Diese Durchbrüche werden beim Durchgang eines geladenen Teilchens
durch die SiO₂-Schicht bei einem anliegenden elektrischen Feld verursacht.

Die Zählrate eines derartigen MOS-Durchbruchdetektors ist bei einer bestimmten Betriebsspannung der Flussdichte, also der Teilchen bezüglich einer bestimmten Fläche, proportional.

Auch bei einem Detektionselement 5 mit einem aktiven Element können unterschiedlich ausgestaltete Felder vorgesehen werden, um gewünschte Strahlenfelder zu analysieren.

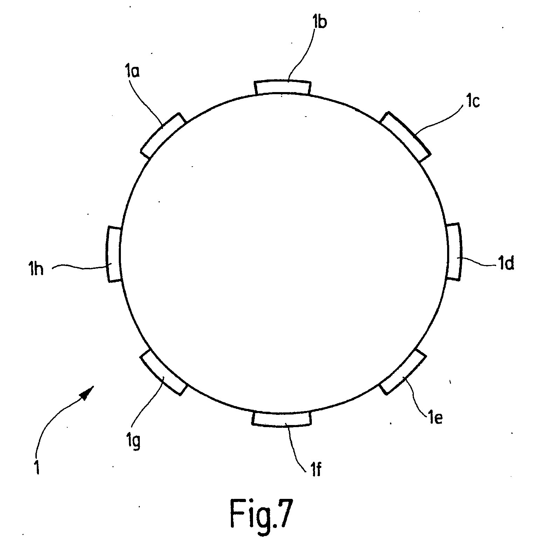

Figur 7 zeigt eine Anordnung einer Anzahl von Dosimetern 1a bis 1h. Die einzelnen Dosimeter sind hier beispielsweise auf einer Kreislinie angeordnet und sind so ausgebildet, wie dies anhand der vorangegangenen Figuren erläutert wurde. Gegebenenfalls können auch Dosimeter unterschiedlichen Aufbaus miteinander zu einer Anordnung einer Anzahl von Dosimetern kombiniert werden.

Wesentlich ist, dass die Dosimeter symmetrisch zueinander angeordnet sind. Vorzugsweise werden sie nicht nur in einer Ebene, wie in Figur 7 dargestellt, angeordnet, sondern auf einem symmetrischen Raumkörper, vorzugsweise auf einer Kugel, um eine Ortsdosismessung sowie Richtungsverteilungsmessung durchführen zu können, indem die einzelnen Dosimeter aufeinander normiert werden und so unterschiedlich detektierte Dosiswerte an unterschiedlichen Orten der Kugel gemessen werden.

Die Normierung erfolgt dadurch, dass die Messwerte eines Dosimeters als Normierungs- oder Bezugsgröße angenommen werden. Die Messwerte der anderen Dosimeter werden durch diese Normierungsgröße dividiert. Damit ergibt sich für jedes Dosimeter ein normierter Messwert. Die normierten Messwerte erleichtern den Vergleich der registrierten Dosis an verschiedenen Orten der Kugel.

Möglich ist es im Übrigen auch, mehrere Dosimeter 1a bis 1h einer Anordnung einer Anzahl von Dosimetern auf einem Phantom, nämlich auf einem dem menschlichen Körper nachgebildeten Modell anzuordnen, um eine Richtungsmessung vorzunehmen.

Dosimeter der hier angesprochenen Art sind, wenn sie als Personendosimeter eingesetzt werden, in einem Gehäuse untergebracht. Ein solches Gehäuse weist typischerweise eine flächige Vorderwand sowie eine flächige Rückwand gleicher Größe auf. Vorder- und Rückwände werden durch Seitenwände voneinander in einem Abstand gehalten, der die Dicke des Gehäuses ausmacht. Typische Maße für ein Gehäuse sind 30 mm x 60 mm für Vorderwand und Rückwand. Die Dicke beträgt 3 bis 15 mm. Das Gehäuse wird aus Kunststoff hergestellt. Soll das Personendosimeter in einem Neutronenstrahlungsfeld eingesetzt werden, in dem ein hoher Neutronenfluss beziehungsweise eine hohe Anzahl von thermischen Neutronen zu erwarten ist, dann muss das Gehäuse einem besonderen Aufbau aufweisenden: die Vorder- und die Rückwand sowie die Seitenwände werden aus verschiedenen Materialien hergestellt. Vorzugsweise ist vorgesehen, dass nur die Seitenwände aus Polyethylen bestehen und Bor- (¹⁰B) und/oder Kadmium- (Cd) und/oder Stickstoff- (¹⁴N) und/oder Lithium-Atome (⁶Li) in Form von chemischen Verbindungen wie beispielsweise Borkarbid (B₄C) enthalten. Da die genannten Elemente langsame Neutronen, die durch die Seitenwände in das Gehäuseinnere und somit auf das Dosimeter gelangen, abschirmen, weist das Personendosimeter in einem so aufgebauten Gehäuse eine verminderte Ansprechfunktion für langsame Neutronen auf. Die durch die Geometrie der Dosimeterelemente gegebene überhöhte Registrierung der langsamen Neutronen bei einem Einbau des Dosimeters in ein bekanntes Gehäuse mit Vorderwand, Rückwand und Seitenwänden aus gleichem Material, wird durch die Verwendung des oben beschriebenen Gehäuses für das erfindungsgemäße Dosimeter somit kompensiert. Ferner wird die Richtungsabhängigkeit im Vergleich zu einem Personendosimeter, welches ein bekanntes Gehäuse aus gleichem Material für Vorderwand, Rückwand und Seitenwände verwendet, modifiziert.

In weiteren Ausführungsbeispielen lassen sich zusätzliche Varianten im Gehäuseaufbau realisieren, in die das Dosimeter nach Anspruch 1 und den folgenden Unteransprüchen eingebaut wird.

Im Übrigen ist es möglich, mindestens zwei Dosimeter mit unterschiedlichen Metallatomen in einem Gehäuse vorzusehen, um die Energie- und/oder Winkelverteilung eines Neutronenfeldes zu erfassen.

Dosimeter der hier angesprochenen Art können also universell verwendet werden. Dabei kann die Anzahl der Dosimeter auf den jeweiligen Detektionsfall angepasst werden.

## Patentansprüche

1. Dosimeter zur Erfassung von hochenergetischen, schnellen und niederenergetischen Neutronen mit
a) einem Neutronenkonverter (3) umfassend
- eine erste Schicht (3a) mit Metallatomen (7), die die Energie der zu erfassenden hochenergetischen Neutronen umsetzen in Protonen, Alphateilchen und geladene Teilchen in einem geeigneten Energiebereich, so dass sie detektierbar sind, wobei die Metallatome (7) stabil im Sinne der Radioaktivität sind,
- eine zweite Schicht (3c) mit wasserstoffhaltigem Polymer zur Erfassung der schnellen Neutronen über eine elastische Streuung mit den Protonen des wasserstoffhaltigen Polymers und
- eine dritte Schicht (3b) zur Erfassung der niederenergetischen Neutronen mit ⁶Li- und/oder ¹⁰B-Atomen und/oder ¹⁴N-Atomen (9), um mit den niederenergetischen Neutronen eine (n,α)-Reaktion und/oder eine (n,p)-Reaktion einzugehen,
wobei die zweite Schicht (3c) zwischen der ersten Schicht (3a) und der dritten Schicht (3b) angeordnet ist; und
b) einem Detektionselement (5) zum Registrieren der erzeugten Protonen, Alphateilchen und geladenen Teilchen, auf dem die dritte Schicht (3b) aufliegt.

2. Dosimeter nach Anspruch 1, **dadurch gekennzeichnet,**
**dass** die Metallatome (7) des Neutronenkonverters (3) eine Kernladungszahl Z>15, vorzugsweise Z>20 aufweisen.

3. Dosimeter nach Anspruch 1 oder 2, **dadurch gekennzeichnet, dass** der Neutronenkonverter (3) Titan-, Chrom-, Vanadium-, Eisen-, Kupfer-, Wolfram- und/oder Bleiatome umfasst.

4. Dosimeter nach einem der vorhergehenden Ansprüche, **dadurch gekennzeichnet, dass** der Neutronenkonverter (3) Metallatome (7) unterschiedlicher Kernladungszahl enthält.

5. Dosimeter nach einem der vorhergehenden Ansprüche, **dadurch gekennzeichnet, dass** der Neutronenkonverter (3) Metallatome (7) von Legierungen umfasst.

6. Dosimeter nach einem der vorhergehenden Ansprüche, **dadurch gekennzeichnet, dass** der Neutronenkonverter (3) in der ersten Schicht (3a) mindestens zwei Schichten mit Metallatomen (7, 7a, 7b, 7c, 7d, 7e) unterschiedlicher Kernladungszahl umfasst.

7. Dosimeter nach Anspruch 1, **dadurch gekennzeichnet, dass** der Neutronenkonverter (3) in der ersten Schicht (3a) Schichten mit Metallatomen (7) umfasst, wobei im Wesentlichen jeweils pro Schicht nur Metallatome (7a bis 7e) mit einer bestimmten Kernladungszahl vorgesehen sind.

8. Dosimeter nach einem der vorhergehenden Ansprüche **dadurch gekennzeichnet, dass** in der ersten Schicht (3a) von der der Neutronenstrahlung zugewandten Seite des Dosimeters (1) aus gesehen Metallatome (7a bis 7e) mit absteigender Kernladungszahl enthalten sind.

9. Dosimeter nach einem der vorhergehenden Ansprüche **dadurch gekennzeichnet, dass** in der ersten Schicht (3a) mindestens eine der Schichten mit Metallatomen (7, 7a, 7b, 7c, 7d, 7e) als Metallfolie oder als mit Metall bedampfte Polymerfolie ausgebildet ist.

10. Dosimeter nach einem der vorhergehenden Ansprüche **dadurch gekennzeichnet, dass** in der ersten Schicht (3a) die Folge der Schichten mit Metallatomen (7a, 7b, 7c, 7d, 7e) unterschiedlicher Kernladungszahl an das Energiespektrum der Neutronenstrahlung angepasst ist.

11. Dosimeter nach einem der vorhergehenden Ansprüche **dadurch gekennzeichnet, dass** der Neutronenkonverter (3) von der der Neutronenstrahlung zugewandten Seite des Dosimeters (1) aus gesehen vor dem Detektionselement (5) ⁶Li- und/oder ¹⁰B-Atome und/oder ¹⁴N-Atome (9) aufweist.

12. Anordnung aus mindestens zwei Dosimetern nach einem der vorhergehenden Ansprüche, **dadurch gekennzeichnet, dass** die mindestens zwei Dosimeter unterschiedliche Metallatome (7) zur Messung der Energie- und/oder Winkelverteilung aufweisen und in einem Gehäuse anordenbar sind.

13. Anordnung aus mindestens zwei Dosimetern nach einem der Ansprüche 1 bis 11, **dadurch gekennzeichnet, dass** der Neutronenkonverter (3) räumlich nebeneinander angeordnete Felder (N1,N2,N3) mit unterschiedlichem Aufbau aufweist, wobei die Felder mit Metallatomen unterschiedlicher Kernladungszahl versehen sind.

14. Anordnung aus einer Anzahl von Dosimetern nach einem der Ansprüche 1 bis 11, **gekennzeichnet dadurch, dass** die Dosimeter auf einer Kugelfläche anordenbar sind, um eine Ortsdosismessung und eine Richtungsverteilungsmessung vorzunehmen.

15. Anordnung aus einer Anzahl von Dosimetern nach einem der Ansprüche 1 bis 11, **gekennzeichnet dadurch, dass** die Dosimeter auf einem Phantom anordenbar sind, um eine Richtungsmessung vorzunehmen.

16. Dosimeter nach einem der vorhergehenden Ansprüche
**dadurch gekennzeichnet, dass** das Detektionselement (5) mindestens ein passives Element und/oder mindestens ein aktives Element umfasst.

17. Dosimeter nach dem vorhergehenden Anspruch **dadurch gekennzeichnet, dass** das passive Element organisches Hochpolymer, und/oder ein anorganisches Kristall und/oder Mineral, und/oder anorganische Gläser und/oder ein organisches Kristall umfasst.

18. Dosimeter nach einem der beiden vorhergehenden Ansprüche **dadurch gekennzeichnet, dass** das aktive Element einen Halbleiter aufweist.

19. Dosimeter nach einem der vorhergehenden Ansprüche **dadurch gekennzeichnet, dass** das Dosimeter als ein Photonendosimeter vorgesehen ist.

20. Dosimeter nach einem der vorhergehenden Ansprüche **dadurch gekennzeichnet, dass** die Konverterschichten und das Detektionselement in einem Gehäuse untergebracht sind, welches eine Vorder- und eine Rückwand, sowie Seitenwände aufweist.

21. Dosimeter nach dem vorstehenden Anspruch **dadurch gekennzeichnet, dass** die Seitenwände Bor-, und/oder Kadmium- und/oder Stickstoff- (¹⁴N) und/oder Lithium-Atome (⁶Li) enthalten.

## Claims

1. Dosimeter for detecting high-energy, fast and low-energy neutrons with
a) a neutron converter (3) comprising
- a first layer (3a) with metal atoms (7), which convert the energy of the high-energy neutrons to be detected into protons, alpha particles and charged particles in a suitable energy range, so that they are detectable, wherein said metal atoms (7) are stable with respect to radioactivity,
- a second layer (3c) with hydrogenous polymer for detecting the fast neutrons by an elastic scattering with the protons of the hydrogenous polymer and
- a third layer (3b) with ⁶Li- and/or ¹⁰B-atoms and/or ¹⁴N-atmos (9) for detecting the low-energy neutrons, to cause a (n,α) reaction and/or a (n,p) reaction with the low-energy neutrons,
wherein the second layer (3c) is located between the first layer (3a) and the third layer (3b); and
b) a detection element for registering said generated protons, alpha particles and charged particles, on which the third layer (3b) rests.

2. Dosimeter according to claim 1, **characterized in that** the metal atoms (7) of the neutron converter (3) comprise an atomic number of Z>15, preferably Z>20.

3. Dosimeter according to claim 1 or 2, **characterized in that** the neutron converter (3) comprises titanium, chrome, vanadium, iron, copper, wolfram and/or lead atoms.

4. Dosimeter according to one of the preceding claims, **characterized in that** the neutron converter (3) contains metal atoms (7) with different atomic numbers.

5. Dosimeter according to one of the preceding claims, **characterized in that** the neutron converter (3) comprises metal atoms (7) of alloys.

6. Dosimeter according to one of the preceding claims, **characterized in that** the neutron converter (3) comprises in the first layer (3a) at least two layers with metal atoms (7, 7a, 7b, 7c, 7d, 7e) of different atomic numbers.

7. Dosimeter according to claim 1, **characterized in that** the neutron converter (3) comprises in the first layer (3) layers with metal atoms (7) where essentially only metal atoms (7a to 7e) with a specific atomic number are provided in each layer.

8. Dosimeter according to one of the preceding claims, **characterized in that** in the first layer (3a), viewed from the side of the dosimeter (1) facing the neutron radiation, are provided metal atoms (7a to 7e) with decreasing atomic numbers.

9. Dosimeter according to one of the preceding claims, **characterized in that** in the first layer (3a) at least one of the layers with metal atoms (7, 7a, 7b, 7c, 7d, 7e) is configured as metal foil or as polymer foil sputtered with metal.

10. Dosimeter according to one of the preceding claims, **characterized in that** in the first layer (3a) the sequence of the layers with metal atoms (7a, 7b, 7c, 7d, 7e) of different atomic numbers is matched to the energy spectrum of the neutron radiation.

11. Dosimeter according to one of the preceding claims, **characterized in that** the neutron converter (3), viewed from the side of the dosimeter (1) facing the neutron radiation, has ⁶Li atoms and/or ¹⁰B atoms and/or ¹⁴N atoms in front of the detection element (5).

12. Arrangement of at least two dosimeters according to one of the preceding claims, **characterized in that** the at least two dosimeters comprise different metal atoms (7) for measuring the energy and/or angular distribution and that said can be housed in a casing.

13. Arrangement of at least two dosimeters according to one of claims 1 to 11, **characterized in that** the neutron converter has fields (N1, N2, N3) with different structures arranged spatially next to each other, wherein the fields are provided with metal atoms of different atomic numbers.

14. Arrangement of a number of dosimeters according to one of claims 1 to 11, **characterized in that** the dosimeters can be arranged on the surface of a cone in order to carry out an area monitoring and a directional distribution measurement.

15. Arrangement of a number of dosimeters according to one of claims 1 to 11, **characterized in that** the dosimeters can be arranged on a phantom in order to carry out a directional measurement.

16. Dosimeter according to one of the preceding claims, **characterized in that** the detection element (5) comprises at least one passive element and/or at least one active element.

17. Dosimeter according to the preceding claim, **characterized in that** the passive element comprises organic high-molecular polymer, and/or an inorganic crystal and/or mineral, and/or inorganic glasses and/or an inorganic crystal.

18. Dosimeter according to one of the two preceding claims, **characterized in that** the active element comprises a semiconductor.

19. Dosimeter according to one of the preceding claims, **characterized in that** the dosimeter is provided as a photon dosimeter.

20. Dosimeter according to one of the preceding claims, **characterized in that** the converter layers and the detection element can be housed in a casing which has a front and back wall and side walls.

21. Dosimeter according to the preceding claim, **characterized in that** the side walls contain borium, and/or cadmium and/or nitrogen (¹⁴N) and/or lithium atoms (⁶Li).

## Revendications

1. Dosimètre destiné à détecter des neutrons à haute énergie, rapides et à faible énergie, comprenant :
a) un convertisseur de neutrons (3) comportant
- une première couche (3a) avec des atomes métalliques (7) qui convertissent l'énergie des neutrons à haute énergie, devant être détectés, en protons, particules alpha et particules chargées, dans un domaine d'énergie approprié, de manière à ce qu'ils soient détectables, les atomes métalliques (7) étant stables au sens de la radioactivité,
- une deuxième couche (3c) avec du polymère contenant de l'hydrogène, destinée à détecter les neutrons rapides par le biais d'une diffusion élastique avec les protons du polymère contenant de l'hydrogène, et
- une troisième couche (3b) destinée à détecter les neutrons à faible énergie avec des atomes ⁶Li et/ou ¹⁰B et/ou ¹⁴N (9) afin d'entrer en réaction (n, α) et/ou en réaction (n, p) avec les neutrons à faible énergie,
la deuxième couche (3c) étant disposée entre la première couche (3a) et la troisième couche (3b) ; et
b) un élément de détection (5) destiné à enregistrer les protons, particules alpha et particules chargées produits, sur lequel repose la troisième couche (3b).

2. Dosimètre selon la revendication 1, **caractérisé en ce que** les atomes métalliques (7) du convertisseur de neutrons (3) présentent un numéro atomique Z>15, de préférence Z>20.

3. Dosimètre selon la revendication 1 ou 2, **caractérisé en ce que** le convertisseur de neutrons (3) comprend des atomes de titane, de chrome, de vanadium, de fer, de cuivre, de tungstène et/ou de plomb.

4. Dosimètre selon l'une des revendications précédentes, **caractérisé en ce que** le convertisseur de neutrons (3) contient des atomes métalliques (7) ayant des numéros atomiques différents.

5. Dosimètre selon l'une des revendications précédentes, **caractérisé en ce que** le convertisseur de neutrons (3) comprend des atomes métalliques (7) d'alliages.

6. Dosimètre selon l'une des revendications précédentes, **caractérisé en ce que** dans la première couche (3a), le convertisseur de neutrons (3) comporte au moins deux couches avec des atomes métalliques (7, 7a, 7b, 7c, 7d, 7e) ayant des numéros atomiques différents.

7. Dosimètre selon la revendication 1, **caractérisé en ce que** dans la première couche (3a), le convertisseur de neutrons (3) comporte des couches avec des atomes métalliques (7), où il est prévu essentiellement pour chaque couche uniquement des atomes métalliques (7a à 7e) avec un numéro atomique défini.

8. Dosimètre selon l'une des revendications précédentes, **caractérisé en ce que** dans la première couche (3a), vu depuis le côté du dosimètre (1) tourné vers le rayonnement neutronique, sont contenus des atomes métalliques (7a à 7e) à numéro atomique décroissant.

9. Dosimètre selon l'une des revendications précédentes, **caractérisé en ce que** dans la première couche (3a), au moins une des couches avec des atomes métalliques (7, 7a, 7b, 7c, 7d, 7e) est réalisée comme feuille métallique ou comme feuille polymère revêtue de métal par dépôt en phase vapeur.

10. Dosimètre selon l'une des revendications précédentes, **caractérisé en ce que** dans la première couche (3a), la succession des couches avec des atomes métalliques (7a, 7b, 7c, 7d, 7e) à numéros atomiques différents est adaptée au spectre énergétique du rayonnement neutronique.

11. Dosimètre selon l'une des revendications précédentes, **caractérisé en ce que**, vu depuis le côté du dosimètre (1) tourné vers le rayonnement neutronique, le convertisseur de neutrons (3) présente des atomes ⁶Li et/ou ¹⁰B et/ou ¹⁴N (9) devant l'élément de détection (5).

12. Dispositif composé d'au moins deux dosimètres selon l'une des revendications précédentes, **caractérisé en ce que** les dosimètres, au nombre d'au moins deux, présentent des atomes métalliques (7) différents pour la mesure de la distribution énergétique et/ou angulaire et peuvent être disposés dans un boîtier.

13. Dispositif composé d'au moins deux dosimètres selon l'une des revendications 1 à 11, **caractérisé en ce que** le convertisseur de neutrons (3) présente des champs (N1, N2, N3) de structure différente, disposés les uns à côté des autres dans l'espace, les champs étant dotés d'atomes métalliques ayant des numéros atomiques différents.

14. Dispositif composé d'un certain nombre de dosimètres selon l'une des revendications 1 à 11, **caractérisé en ce que** les dosimètres peuvent être disposés sur une surface sphérique, en vue d'effectuer une mesure de dose locale et une mesure de distribution directionnelle.

15. Dispositif composé d'un certain nombre de dosimètres selon l'une des revendications 1 à 11, **caractérisé en ce que** les dosimètres peuvent être disposés sur un fantôme, en vue d'effectuer une mesure des directions.

16. Dosimètre selon l'une des revendications précédentes, **caractérisé en ce que** l'élément de détection (5) comprend au moins un élément passif et/ou au moins un élément actif.

17. Dosimètre selon la revendication précédente, **caractérisé en ce que** l'élément passif comprend du haut polymère organique et/ou un cristal et/ou un minerai inorganique et/ou des verres inorganiques et/ou un cristal organique.

18. Dosimètre selon l'une des deux revendications précédentes, **caractérisé en ce que** l'élément actif présente un semi-conducteur.

19. Dosimètre selon l'une des revendications précédentes, **caractérisé en ce que** le dosimètre est prévu comme dosimètre de photons.

20. Dosimètre selon l'une des revendications précédentes, **caractérisé en ce que** les couches de convertisseur et l'élément de détection sont logés dans un boîtier qui présente une paroi avant et une paroi arrière ainsi que des parois latérales.

21. Dosimètre selon la revendication précédente, **caractérisé en ce que** les parois latérales contiennent des atomes de bore et/ou de cadmium et/ou d'azote (¹⁴N) et/ou de lithium (⁶Li).
